# EUROPEAN PATENT SPECIFICATION

(11) **EP 1 501 353 B1**
(45) Date of publication and mention of the grant of the patent: **04.03.2009**
(21) Application number: 03722429.2
(22) Date of filing: 09.04.2003
(51) Int. Cl.: A01N 25/00, A01N 59/00, A01N 63/00

(54) **COMPOSITION FOR LURING AND CONTROLLING ANTHROPODS COMPRISING SYNTHETIC SILICIC ACID AND PROTEIN AUTOLYSATE**
ZUSAMMENSETZUNGEN AUF BASIS VON KIESELSÄURE UND PROTEIN-AUTOLYSATE ZUR ANLOCKUNG UND BEKÄMPFUNG VON ARTHROPODEN
COMPOSITION A BASE D'ACIDE SILICIQUE SYNTHETIQUE ET D'AUTOLYSAT PROTEIQUE DESTINEE A ATTIRER ET A DETRUIRE LES ARTHROPODES

(30) Priority: 24.04.2002 DE 10218428
(43) Date of publication of application: 02.02.2005
(73) Proprietor: Bayer CropScience S.A., 69009 Lyon (FR)
(72) Inventor: PATEL, Smita, 65817 Eppstein-Bremthal (DE); GRANGE, Jean-Luc, 69590 Larajasse (FR); MCLEAN BULL, Richard, Indooroopilly, Queensland 4068 (AU)
(74) Representative: Bröcher, Dirk Joachim
(86) International application number: PCT/EP2003/003676
(87) International publication number: WO 2003/090530

(56) References cited:
- DE-A- 19 749 683
- LLOYD AND DREW : "Modification and Testing of Brewery Waste Yeast as a protein sourcr for fruit fly bait" MANAGEMENT OF FRUIT FLIES IN THE PACIFIC - ACIAR PROCEEDINGS, vol. 76, 1997, pages 192-198, XP001153059
- DATABASE WPI Week 198114 Derwent Publications Ltd., London, GB; AN 1981-24454D XP002195650 & JP 56 015204 A (RYUKIU OIL KK), 14 February 1981 (1981-02-14)

## Description

The invention relates to a composition, composed of protein autolysates in combination with silicates, for luring and controlling animal pests.

The use of luring substances represents a possibility for controlling animal pests without, for example, the entire area having to be treated comprehensively with the substances which are suitable for achieving the control. These methods, which are termed bait methods, also avoid undesirable effects on useful, pest-destroying animals, while the entry into the environment of the substances which are suitable for achieving the control is less and, In many cases, bait methods are also more economical than the comprehensive treatment of a whole area.

Suitable substances for luring animal pests, preferably arthropods, can be obtained from a wide variety of sources, In addition to substances having a specific effect, such as sexual pheromones, substances having a broad effect are also used for luring and controlling arthropods. These substances include chemical compounds, such as trimethylamine or ammonia (WO-A-95/14379), commercially available foodstuffs, such as fish, fishmeal and molasses, and also sugar, honey and milk powder (GB-A-1044663) and their degradation products, such as heat-fermented fruit juice (JP-A-52139728) or protein hydrolysate of plant and animal origin, for example composed of fermented fruits, composed of hen egg white (DE-A-19749683), composed of skimmed milk and yeasts (CA-A-1185172) and vegetables (US-A-4160824). Also protein autolysates derived from Saccharomyces are known to be used in spray protein baits (Lloyd, A., Drew, R. A.l., ACIAR Proceedings, vol. 26, 1997, pages 192-198).

Silicates, such as naturally occurring kieselguhr, also termed diatomaceous earth or infusorial earth, or syntheticatlly prepared silicic acids, are mainly used In bait methods as a carrier material for the luring substances and other active compounds or active substances. They are consequently only formulation aids and do not themselves, therefore, constitute any component which is active in controlling animal pests. However, it is also known that small quantities of mineral dusts of a particular granule size, such as diatomaceous earth, can themselves possess an effect on insects. The reason for this is, on the one hand, the sharp edges of the mineral particles, which lead to mechanical damage to the insect cuticular tissue, in particular to the heavily used joint parts (CA-A-1185172, US-A-5186935); and, on the other hand, silicic acids having a hygroscopic action, for example, such as, for example, colloidal silicon dioxides, are able to extract the life-sustaining water from the insects, thereby desiccating them (DE-A-19749683).

US-A-3846557 (DE OS 2326799) refers to the problems associated with liquid compositions for luring insects: "In addition, the known liquid mixtures are not particularly effective since, after a short period of time after having been sprayed on surfaces, they no longer attract the insects. While some dry baits have been developed, these baits are not luring baits, i.e. they do not attract the insects but are, instead, contact baits: Contact baits clearly do have to come into contact with the insect. Following the contact, the insect remains and feeds. These baits are not suitable for midges, blowflies, fruitflies and the like because these types of fly are widely distributed over a given area and do not generally land and investigate the substrates". The cited patent publication therefore describes a method in which synanthropic flies are lured by proteins which are decomposing and fermenting. The "luring bait" which was used was obtained from a mixture of dried, pulverized whole eggs and water, which had been fermented by bacteria and microorganisms derived from the air. After the process of decomposition had come to an end, the resulting slurry was freeze-dried and then tested, after 1% of the insecticide dimethyl-2,2-dichlorophenyl phosphate (DDVP) had been added, on midges in the field. In this connection, it was found that the sought-after luring effect, due to the development of gases from the luring bait, is dependent on the moisture content of the given substrate or on the given moisture content of the environment, with a high moisture content leading to a correspondingly greater efficacy. In addition to referring to the freeze-drying described in the examples, the cited patent publication also refers to the use of adsorption materials, such as diatomaceous earth, for removing the excess water from the fermented egg/water slurry.

The object of the present Invention was to provide a composition for luring and controlling animal pests, which offers the advantages of liquid compositions, such as good metering ability and distribution properties, and, at the same time, avoids the above-described problems, such as the period of effective luring after application being too short. In addition, the efficacy of the luring and control should also, as far as possible, be Independent of the moisture content of the substrate or of the moisture content of the environment.

Surprisingly, it has been found that compositions comprising protein autolysates derived from yeast and synthetic silicia acids have a high efficacy for luring and controlling animal pests.

The invention provides a composition which comprises:
a) one or more protein autolysates derived from yeasts, and
b) one or more synthetic silicic acids.
c) one or more active compounds directed against animal pests

The ratio of the components a) and b) can vary within wide limits and is in general in range from 10 000:1 to 1:10 000, in particular from 1000:1 to 1:1000% by weight.

The composition according to the invention comprises active chemical compounds as a further component c). The active compounds include, for example, active compounds directed against animal pests (such as insecticides, acaricides and sterilizing agents), other luring substances and aromatic principles, and also preservatives, such as fungicides, which can either be used as a direct addition, for example as a final formulation (syn. coformulation), or as a subsequent addition, for example as something which is subsequently admixed at the site of use (syn. tank mix).

Due to the good flow characteristics of the pulverulent composition according to the invention, it is possible to achieve a uniform distribution and consequently superior metering ability, like for liquid compositions, while avoiding the above mentioned problems of such compositions. In particular, it is possible to reduce, to a very large extent, the dependence on the moisture content of the substrate or the environment, as the working examples demonstrate. In addition the efficacy of the protein autolysates in the composition according to the invention is increased, by way of a synergism, compared to protein autolysates being used on their own.

The invention furthermore provides a method for luring and controlling animal pests, with the animal pests being brought into contact with a composition according to the invention, for example by the composition according to the Invention being applied onto, or In the vicinity of, the plants which have been infested by the animal pests, or their seeds, and in the substrates, areas or spaces which they have colonized.

The invention also provides the use of a composition according to the invention for luring and controlling animal pests, for example in agriculture, in horticulture, in forests, in animal husbandry, in animal breeding, in the protection of stored products, In the protection of materials, in the hygiene sector and in the domestic field.

The composition according to the invention makes it possible to prepare a finished formulation in a simplified manner, which formulation can, for example after having been stirred into the appropriate quantity of water, be used immediately at the site of employment.

The Invention also provides to a method for preparing a composition according to the invention, with component a) and component b), and component c), being mixed with each other. This takes place either directly or in a mixture with solvents and/or formulation aids.

As used herein, the term "protein autolysate" encompasses all the products which are formed during the course of an autolysis (syn. self-decomposition process; as the totality of all the breakdown processes in dead organisms as a result of hydrolytic enzymes, such as proteases, which are still active).

The term "synthetic silicic acids" encompasses all the silicic acids (syn, silicates) which are obtained synthetically,

The term "control" encompasses both the direct effect on the animal pests, as ensues, for example, as a result of inactivation and/or destruction, within the sense of combating, and the indirect effect, as ensues, for example, as a result of the animal pest being lured away from the area colonized by it, and/or removed from this area by being caught.

The term "animal pests" encompasses both the animal organisms which bring about damage, directly or indirectly, and all animal organisms which are generally described as being a nuisance due to their unwanted appearance.

The term "active compounds directed against animal pests" encompasses all compounds whose effect on animal pests can be either direct, for example as a result of inactivation and/or destruction within the sense of combating, or indirect, for example as a result of disorientation and/or population-reducing effects.

Protein autolysates according to the invention are preferably those included in the groups of protein autolysates derived from yeasts of the genera Saccharomyces and Schizosaccharomyces, particularly preferably protein autolysates derived from yeasts of the species Saccharomyces cerevisiae, Saccharomyces bayanus, Saccharomyces carlsbergensis, Saccharomyces chevalieri, Saccharomyces chodati and Saccharomyces diastaticus, very particularly preferably protein autolysates derived from yeasts of the species Saccharomyces cerevisiae and Saccharomyces carlsbergensis, such as liquid ^{®}Pinnacle protein autolysate (obtained from brewery yeast residues after fermenting with papain enzyme, EC 3.4.4.10; Mauri Yeast Australia Ltd., Toowoomba, Queensland, Australia) and/or pulverulent ^{®}SPA400 protein autolysate (obtained from brewery yeast residues; Halcyon Proteins Pty Ltd., Melbourne, Australia).

Synthetic silicic acids are preferably those included in the groups of pyrogenic silicic acids and precipitated silicic acids (definition and preparation: Römpp, Chemie Lexikon [Enclopedia of Chemistry], 9th Edition, Georg Thieme Verlag Stuttgart, New York, 1995, pp. 2236-2237 - Paperback edition), particularly preferably pyrogenic silicic acids, such as ^{®}Areosil 200 (CAS Reg. No. 69012-64-2; Degusa AG, Frankfurt/M., Germany) and precipitated silicic acids, such as ^{®}Sipernat 50 S (CAS Reg. No. 7631-86-9; Degusa AG, Frankfurt/M., Germany), both included under No. 2315454 of the European Inventory of Existing Commercial Chemical Substances (EINECS, syn. European list of existing substances), very particularly preferably pyrogenic silicic acids, such as ^{®}Areosil 200.

The composition according to the invention is suitable, while being well tolerated by plants and having favorable homeotherm toxicity, for luring and controlling animal pests, in particular arthropods, such as insects and arachnids, but also helminths such as nematodes which are injurious to plants. The pests are found in agriculture, in horticulture, in forests, in animal husbandry and animal breeding, and in the protection of stored products and the protection of materials, in the hygiene sector and in the domestic field. The composition is effective against normally sensitive and resistant species and also effective against all or individual developmental stages. The abovementioned pests include:
from the order of the isopoda, for example, Armadillidium spp., Oniscus spp., Porcellio spp..
from the order of the Diplopoda, for example, Blaniulus spp..
from the order of the Chilopoda, for example, Geophilus spp., Scutigera spp..
from the order of the Symphyla, for example, Scutigerella spp..
from the order of the Thysanura, for example, Lepisma spp..
from the order of the Collembola, for example, Onychiurus spp..
from the order of the Orthoptera, for example, Blattella spp., Blattella germanica, Blatta orientalis, Periplaneta spp., Periplaneta americana, Periplaneta australasiae, Leucophaea spp., Acheta spp., Acheta domesticus, Gryllotalpa spp., Gryllus spp., Gryllus bimaculatus, Locusta spp., Locusta migratoria migratorioides, Melanoplus spp., Schistocerca spp..
from the order of the Dermaptera, for example, Forficula spp., Forficula auricularia.
from the order of the Isoptera, for example, Reticulitermes spp., Reticulitermes speratus, Coptotermes spp., Coptotermes formosanus.
from the order of the Anoplura, for example, Pediculus spp., Pediculus humanus humanus, Pediculus humanus capitis, Haematopinus spp., Linognathus spp..
from the order of the Mallophaga, for example, Trichodectes spp., Damalinea spp..
from the order of the Thysanoptera, for example, Frankliniella spp., Frankliniella fusca, Frankliniella occidentalis, Frankliniella tritici, Kakothrips spp., Hercinothrips spp., Scirtothrips spp., Scirtothrips citri, Scirtothrips aurantii, Taeniothrips spp., Thrips spp., Thrips oryzae, Thrips palmi, Thrips tabaci.
from the order of the Heteroptera, for example, Eurygaster spp., Stephanitis spp., Lygus spp., Aelia spp., Eurydema spp., Dysdercus spp., Piesma spp., Piesma quadrata, Rhodnius prolixus, Triatoma spp., Cimex lectularius. from the order of the Homoptera, for example, Aleurodes spp., Aleurodes brassicae, Aleurodes proletella, Bemisia spp., Bemisia tabaci, Trialeurodes spp., Trialeurodes vaporariorum, Brevicoryne spp., Brevicoryne brassicae, Cryptomyzus spp., Aphis spp., Aphis fabae, Aphis gossypii, Aphis pomi, Eriosoma spp., Hyalopterus spp., Phylloxera spp., Pemphigus spp., Macrosiphum spp., Macrosiphum avenae, Myzus spp., Myzus persicae, Phorodon spp., Phorodon humuli, Rhopalosiphum spp., Rhopalosiphum padi, Empoasca spp., Euscelis spp., Eulecanium spp., Saissetia spp., Aonidiella spp., Aonidiella aurantii, Aspidiotus spp., Nephotettix spp., Nephotettix cincticeps, Laodelphax spp., Laodelphax striatellus, Nilaparvata spp., Nilaparvata lugens, Sogatella spp., Pseudococcus spp., Psylla spp., Psylla mali, Aphrophora spp., Aeneolamia spp..
from the order of the Lepidoptera, for example, Pectinophora spp., Pectinophora gossypiella, Bupalus spp., Cheimatobia spp., Cnephasia spp., Hydraecia spp., Lithocolletis spp., Hyponomeuta spp., Plutella spp., Plutella xylostella, Malacosoma spp., Euproctis spp., Lymantria spp., Bucculatrix spp., Phytometra spp., Scrobipalpa spp., Phthorimaea spp., Gnorimoschema spp., Autographa spp., Evergestis spp., Lacanobia spp., Cydia spp., Cydia pomonella, Pseudociaphila spp., Phyllocnistis spp., Agrotis spp., Agrotis segetum, Agrotis ipsilon, Euxoa spp., Feltia spp., Earias spp., Heliothis spp., Heliothis virescens, Heliothis armigera, Heliothis zea, Helicoverpa spp., Helicoverpa armigera, Helicoverpa zea, Bombyx spp., Bombyx mori, Laphygma spp., Mamestra spp., Mamestra brassicae, Panolis spp., Prodenia spp., Prodenia litura, Spodoptera spp., Spodoptera littoralis, Spodoptera litura, Spodoptera exigua, Trichoplusia spp., Trichoplusia ni, Carpocapsa spp., Carpocapsa pomonella, Pieris spp., Pieris brassicae, Chilo spp., Chilo suppressalis, Ostrinia spp., Ostrinia nubilalis, Pyrausta spp., Pyrausta nubilalis, Ephestia spp., Ephestia kuehniella, Galleria spp., Galleria mellonella, Cacoecia spp., Capua spp., Choristoneura spp., Clysia spp., Hofmannophila spp., Homona spp., Tineola spp., Tinea spp., Tinea pellionella, Tortrix spp., Tortrix vitisana, Lobesia spp., Lobesia botrana.
From the order of the Coleoptera, for example, Anobium spp., Rhizopertha spp., Rhizopertha dominica, Bruchidius spp., Bruchidius obtectus, Acanthoscelides spp., Acanthoscelides obtectus, Hylotrupes spp., Aclypea spp., Agelastica spp., Leptinotarsa spp., Leptinotarsa decemlineata, Psylliodes spp., Chaetocnema spp., Cassida spp., Bothynoderes spp., Clivina spp., Ceutorhynchus spp., Ceutorhynchus assimilis, Phyllotreta spp., Apion spp., Sitona spp., Bruchus spp., Phaedon spp., Phaedon cochleariae, Diabrotica spp., Diabrotica undecimpunctata, Diabrotica virgifera, Psylloides spp., Epilachna spp., Epilachna varivestis, Atomaria spp., Atomaria linearis, Oryzaephilus spp., Anthonomus spp., Anthonomus grandis, Sitophilus spp., Sitophilus granarius, Sitophilus oryzae, Otiorhynchus spp., Otiorrhynchus sulcatus, Cosmopolites spp., Ceuthorrynchus spp., Hypera spp., Dermestes spp., Trogoderma spp., Anthrenus spp., Attagenus spp., Lyctus spp., Meligethes spp., Meligethes aeneus, Ptinus spp., Niptus spp., Gibbium spp., Tribolium spp., Tenebrio spp., Tenebrio molitor, Agriotes spp., Agriotes lineatus, Conoderus spp., Melolontha spp., Melolontha melolontha, Amphimallon spp., Costelytra spp., Costelytra zealandica.
From the order of the Hymenoptera, for example, Diprion spp., Diprion pini, Hoplocampa spp., Lasius spp., Monomorium spp., Vespa spp..
From the order of the Diptera, for example, Drosophila spp., Drosophila melanogaster, Chrysomyxa spp., Hypoderma spp., Tannia spp., Bibio spp., Bibio hortulanus, Oscinella spp., Oscinella frit, Phorbia spp., Pegomyia spp., Anastrepha spp., Ceratitis spp., Dacus spp., Rhagoletis spp., Bactrocera spp., Toxotrypana spp., Tipula spp., Tipula paludosa, Tipula oleracea, Dermatobia spp., Dermatobia hominis, Cordylobia spp., Cordylobia anthropophaga, Gasterophilus spp., Hypoderma spp., Cuterebra spp., Cochliomyia spp., Wohlfahrtia spp., Stomoxys spp., Calliphora spp., Calliphora erythrocephala, Gastrophilus spp., Hyppobosca spp., Lucilia spp., Lucilia sericata, Musca spp., Musca domestica, Fannia spp., Fannia canicularis, Oestrus spp., Tabanus spp., Aedes spp., Aedes aegypti, Culex spp., Culex pipiens, Culex quinquefasciatus, Anopheles spp., Anopheles arabiensis.
From the order of the Siphonaptera, for example, Xenopsylla spp., Xenopsylla cheopsis, Ctenocephalides spp., Ctenocephalides felis, Ctenocephalides canis, Ceratophyllus spp., Pulex spp., Pulex irritans.
From the order of the Acarina, for example, Acarus spp., Acarus siro, Bryobia spp., Bryobia praetiosa, Panonychus spp., Panonychus ulmi, Panonychus citri, Tetranychus spp., Tetranychus urticae, Eotetranychus spp., Oligonychus spp., Eutetranychus spp., Eriophyes spp., Eriophyes ribis, Phyllocoptruta spp., Phyllocoptruta oleivora, Tarsonemus spp., Argas spp., Argas reflexus, Argas persicus, Ornithodoros spp., Ornithodoros moubata, Dermacentor spp., Dermacentor marginatus, Hyalomma spp., Dermanyssus spp., Dermanyssus gallinae, Boophilus spp., Boophilus microplus, Haemaphysalis spp., Psoroptes spp., Chorioptes spp., Sarcoptes spp., Rhipicephalus spp., Rhipicephalus sanguineus, Ixodes spp., Ixodes ricinus, Amblyomma spp..
From the class of helminths, for exmaple, Schistosoma spp., Fasciola spp., Dicrocoelium spp., Opisthorchis spp., Clonorchis spp., Paragonimus spp., Taenia saginata, Taenia solium, Echinococcus granulosus, Echinococcus multilocularis, Hymenolepis nana, Diphyllobothrium latum, Onchocerca volvulus, Wuchereria bancrofti, Brugia malayi, Brugia timori, Loa loa, Dracunculus medinensis, Enterobius vermicularis, Trichinella spiralis, Trichinella nativa, Trichinella britovi, Trichinella nelsoni, Trichinella pseudopsiralis, Ascaris spp., Ascaris lumbricoides, Trichuris trichuria, Ancylostoma duodenale, Ancylostoma ceylanicum, Ancylostoma braziliensis, Strongyloides stercoralis, Strongyloides fuellebomi, Haemonchus spp., Ostertagia spp., Trichostrongulus spp., Cooperia spp., Bunostomum spp., Nematodirus spp., Chabertia spp., Strongyloides spp., Oesophagostomum spp., Hyostrongulus spp., Ancylostoma spp., Dictyocaulus filaria, Heterakis spp. and from the subgroup of nematodes which are parasitic to plants, for example, Meloidogyne spp., Meloidogyne incognita, Meloidogyne hapla, Meloidogyne javanica, Heterodera spp., Heterodera trifolii, Heterodera avenae, Heterodera schachtii, Heterodera glycines, Globodera spp., Globodera rostochiensis, Globodera pallida, Radopholus spp., Radopholus similis, Pratylenchus spp., Pratylenchus neglectus, Pratylenchus penetrans, Pratylenchus curvitatus, Tylenchulus spp., Tylenchulus semipenetrans, Tylenchorhynchus spp., Tylenchorhynchus dubius, Tylenchorhynchus claytoni, Rotylenchus spp., Rotylenchus robustus, Heliocotylenchus spp., Haliocotylenchus multicinctus, Belonoaimus spp., Belonoaimus longicaudatus, Longidorus spp., Longidorus elongatus, Trichodorus spp., Trichodorus primitivus, Xiphinema spp., Xiphinema index, Ditylenchus spp., Ditylenchus dipsaci, Ditylenchus destructor, Aphelenchoides spp., Aphelenchoides ritzemabosi, Anguina spp., Anguina tritici.

The composition according to the invention for luring and controlling animal pests is preferably used for arthropods, particularly preferably for synanthropic flies, such as flies from the group of the cyclorrhapha (order diptera, suborder brachycera), including the families Muscidae (for example, houseflies and domestic flies), Calliphoridae (for example greenbottles, deathflies and bluebottles), Chloropidae (for example frit flies), Sarcophagidae (for example flesh flies), Tephritidae (for example fruitflies and drilling flies, such as Anastrepha spp., Ceratitis spp., Rhagoletis spp., Bactrocera spp., Toxotrypana spp., Dacus spp.) and Drosophilidae (for example fruitflies, such as Drosophila spp.), very particularly preferably for flies from the families Tephritidae (for example fruitflies and drilling flies, such as Anastrepha spp., Anastrepha obliqua, Anastrepha fraterculus, Anastrepha braziliensis, Anastrepha serpentina, Anastrepha ludens, Anastrepha suspensa, Ceratitis spp., Ceratitis capitata, Ceratitis rosa, Rhagoletis spp., Rhagoletis cerasi, Rhagoletis pomonella, Bactrocera spp., Bactrocera carambolae, Bactrocera latifrons, Bactrocera passiflorae, Bactrocera tryoni, Bactrocera oleae, Bactrocera cucurbitae, Bactrocera dorsalis, Bactrocera tau, Bactrocera latifrons, Bactrocera occipitalis, Bactrocera papayae, Bactrocera philippinensis, Bactrocera tryoni, Bactrocera umbrosa, Toxotrypana spp., Toxotrypana curvicauda, Dacus spp.) and Drosophilidae (for example fruitflies, such as Drosophila spp., Drosophila melanogaster).

The active compounds directed against animal pests include, for example, phosphoric esters, carbamates, carboxylic esters (syn. pyrethroids), amidines, tin compounds, insecticidal phenylpyrazoles, neonicotinoids (syn. nitromethylenes), spinosyns (syn. macrocyclic lactones, syn. macrolides) and substances produced by microorganisms:
1. from the group of the phosphorus compounds acephate, azamethiphos, azinphos-ethyl, azinphos-methyl, bromophos, bromophos-ethyl, cadusafos (F-67825), chlorethoxyphos, chlorfenvinphos, chlormephos, chlorpyrifos, chlorpyrifos-methyl, demeton, demeton-S-methyl, demeton-S-methyl sulfone, dialifos, diazinon, dichlorvos, dicrotophos, dimethoate, disulfoton, EPN, ethion, ethoprophos, etrimfos, famphur, fenamiphos, fenitriothion, fensulfothion, fenthion, fonofos, formothion, fosthiazate (ASC-66824), heptenophos, isazophos, isothioate, isoxathion, malathion, methacrifos, methamidophos, methidathion, salithion, mevinphos, monocrotophos, naled, omethoate, oxydemeton-methyl, parathion, parathion-methyl, phenthoate, phorate, phosalone, phosfolan, phosphocarb (BAS-301), phosmet, phosphamidon, phoxim, pirimiphos, pirimiphos-ethyl, pirimiphos-methyl, profenofos, propaphos, proetamphos, prothiofos, pyraclofos, pyridapenthion, quinalphos, sulprofos, temephos, terbufos, tebupirimfos, tetrachlorvinphos, thiometon, triazophos, trichlorphon, vamidothion;
2. from the group of the carbamates alanycarb (OK-135), aldicarb, 2-sec-butylphenyl methylcarbamate (BPMC), carbaryl, carbofuran, carbosulfan, cloethocarb, benfuracarb, ethiofencarb, furathiocarb, HCN-801, isoprocarb, methomyl, 5-methyl-m-cumenylbutyryl (methyl)carbamate, oxamyl, pirimicarb, propoxur, thiodicarb, thiofanox, 1-methylthio(ethylideneamino)-N-methyl-N-(morpholinothio)carbamate (UC 51717), triazamate;
3. from the group of the carboxylic esters (syn. pyrethroids) acrinathrin, allethrin, alphametrin, 5-benzyl-3-furylmethyl (E)- (1 R)-cis-2,2-dimethyl-3-(2-oxothiolan-3-ylidenemethyl)cyclopropanecarboxylate, beta-cyfluthrin, beta-cypermethrin, bioallethrin, bioallethrin ((S)-cyclopentylisomer), bioresmethrin, bifenthrin, (RS)-1-cyano-1-(6-phenoxy-2-pyridyl)methyl (1RS)-trans-3-(4-tert-butylphenyl)-2,2-dimethylcyclopropanecarboxylate (NCI 85193), cycloprothrin, cyfluthrin, cyhalothrin, cythithrin, cypermethrin, cyphenothrin, deltamethrin, empenthrin, esfenvalerate, fenfluthrin, fenpropathrin, fenvalerate, flucythrinate, flumethrin, fluvalinate (D isomer), imiprothrin (S-41311), lambda-cyhalothrin, permethrin, phenothrin ((R) isomer), prallethrin, pyrethrins (natural products), resmethrin, tefluthrin, tetramethrin, theta-cypermethrin (TD-2344), tralomethrin, transfluthrin, zeta-cypermethrin (F-56701);
4. from the group of the amidines amitraz, chlordimeform;
5. from the group of the tin compounds cyhexatin, fenbutatin oxides;
6. from the group of the insecticidal phenylpyrazoles ethiprole (sulfethiprole), fipronil;
7. from the group of the neonicotinoids (syn, nitromethylenes) acetamiprid, clothianidine, dinotefuran, imidacloprid, nitenpyram (TI-304), thiacloprid and thiamethoxam;
8. from the group of the spinosyns (syn. macrocyclic lactones, syn. macrolides) spinosad;
9. Others: abamectin, ABG-9008, Anagrapha falcitera, AKD-1022, AKD-3059, ANS-118, Bacillus thuringiensis, Beauveria bassianea, bensultap, bifenazate (D-2341), binapacryl, BJL-932, bromopropylate, BTG-504, BTG-505, buprofezin, camphechlor, cartap, chlorobenzilate, chlorfenapyr, chlorfluazuron, 2-(4-chlorophenyl)-4,5-diphenylthiophene (UBI-T 930), chlorfentezine, chromafenozide (ANS-118), CG-216, CG-217, CG-234, A-184699, 2-naphthylmethyl cyclopropanecarboxylate (Ro12-0470), cyromazin, diacloden (thiamethoxam), diafenthiuron, ethyl N-(3,5-dichloro-4-(1,1,2,3,3,3-hexafluoro-1-propyloxy)phenyl)carbamoyl)-2- chlorobenz carboximidate, DDT, dicofol, diflubenzuron, N-(2,3-dihydro-3-methyl-1,3-thiazol-2-ylidene)-2,4-xylidine, dinobuton, dinocap, diofenolan, DPX-062, emamectin benzoate (MK-244), endosulfan, ethofenprox, etoxazole (YI-5301), fenazaquin, fenoxycarb, fluazuron, flumite (flufenzine, SZI-121), 2-fluoro-5-(4-(4-ethoxyphenyl)-4-methyl-1-pentyl)diphenyl ether (MTI 800), granulosis and nuclear polyhedrosis viruses, fenpyroximate, fenthiocarb, flubenzimine, flucycloxuron, flufenoxuron, flufenprox (ICI-A5683), fluproxyfen, gamma-HCH, halofenozide (RH-0345), halofenprox (MTI-732), hexaflumuron (DE_473), hexythiazox, HOI-9004, hydramethylnon (AC 217300), lufenuron, indoxacarb (DPX-MP062), kanemite (AKD-2023), M-020, MTI-446, ivermectin, M-020, methoxyfenozide (intrepid, RH-2485), milbemectin, NC-196, neemgard, 2-nitromethyl-4,5-dihydro-6H-thiazine (DS 52618), 2-nitromethyl-3,4-dihydrothiazole (SD 35651), 2-nitromethylene-1,2-thiazinan-3-ylcarbamaldehyde (WL 108477), pyriproxyfen (S-71639), NC-196, NC-1111, NNI-9768, novaluron (MCW-275), OK-9701, OK-9601, OK-9602, propargite, pymethrozine, pyridaben, pyrimidifen (SU-8801), RH-0345, RH-2485, RYI-210, S-1283, S-1833, SB7242, SI-8601, silafluofen, silomadine (CG-177), SU-9118, tebufenozide, tebufenpyrad (MK-239), teflubenzuron, tetradifon, tetrasul, thlocyclam, TI-435, tolfenpyrad (OMI-88), triazamate (RH-7988), triflumuron, verbutin, vertalec (mykotal), YI-5301,

The active compounds directed against animal pests are preferably derived from the group of the phosphoric esters, carbamates, carboxylic esters (syn. pyrethroids), amidines, tin compounds, insecticidal phenylpyrazoles, neonicotinoids (syn, nitromethylenes), spinosyns (syn, macrocyclic lactones, syn. macrolides) and substances produced by microorganisms, particularly preferably from the group of the phosphoric esters, insecticidal phenylpyrazoles, neonicotinolds (syn, nitromethylenes) and spinosyns (syn. macrocyclic lactones, syn, macrolldes);
and are very particularly preferably the insecticides dimethoate, malathion, ethiprole, fipronll, imidacloprid, thiacloprid and spinosad.

The abovementioned active compounds directed against animal pests are known active compounds and most of them are described In The e-Pesticide Manual', CD ROM Version 2.0, 2000-2001 (ISBN: 1-901396-23-1), based on "The Pesticide Manual", 12th Ed., The British Crop Protection Council, Farnham, UK, 2000.

A pesticidal composition according to the Invention generally comprises from 0.0001 to 95 % by weight of one or more active compounds.

In order to produce the composition according to the invention, components a) and b), and component c), either as a pure substance and/or already being present in a mixture for use, and, where appropriate, other additives, are added together and brought into a suitable usage form (formulation).

The composition according to the invention can be formulated in a variety of ways depending on how the biological and/or physicochemical parameters predetermine it. Examples of formulation possibilities which come into consideration are: dusts (DP), granules in the form of microgranules, spray granules, coated granules and adsorption granules, water-dispersible granules (WG), wettable powders (WP), aqueous solutions (SL), emulsions, sprayable solutions, suspoemulsions (SE), seed-dressing products, ULV formulations, microcapsules, waxes, pastes or gels.

The types of formulation for the composition according to the invention are preferably dusts, granules, paste formulations and gel formulations, particularly preferably paste formulations and gel formulations, very particularly preferably gel formulations.

These individual formulation types are known in principle and are described, for example, in: Winnacker-Küchler, "Chemische Technologie" [Chemical Technology], Volume 7, C. Hanser Verlag Munich, 4th Ed., 1986; van Falkenberg, "Pesticides Formulations", Marcel Dekker N.Y., 2nd Ed. 1972-73; K. Martens, "Spray Drying Handbook", 3rd Ed. 1979, G. Goodwin Ltd. London.

These sources, and the literature cited therein, are hereby expressly incorporated by reference; by being cited, they are to be regarded as being a constituent part of the description.

Dusts are obtained, for example, by grinding the composition according to the invention with finely dispersed solid materials, for example talc or natural clays, such as kaolin, bentonite, pyrophyllite or diatomaceous earth. Granules of the composition according to the invention can be prepared either by applying it onto adsorptive, granulated inert material or by applying it, by means of adhesives, for example polyvinyl alcohol, sodium polyacrylate or else mineral oils, onto the surface of carrier materials such as sand or kaolinites, or of granulated inert material. The composition according to the invention can also be granulated in the manner which is customary for preparing fertilizer granules, if desired as a mixture with fertilizers.

Paste formulations and gel formulations are obtained, for example, by mixing the composition according to the invention with structure-imparting substances, such as cellulose, heteropolysaccharides (e.g. ^{®}Rhodigel Easy, Rhodia GmbH, Frankfurt/M., Germany) or argillaceous earths, with wetting agents, such as naphthalene-sulfonate condensate (e.g. ^{®}Morwet D425, Witco, Geneva, Switzerland), and with liquids, such as water.

Wettable powders are preparations which are uniformly dispersible in water and which also comprise, aside from the composition according to the invention, wetting agents, for example polyoxyethylated alkylphenols, polyoxyethylated fatty alcohols, alkylsulfonates or alkylphenolsulfonates and dispersants, for example sodium lignosulfonate or sodium 2,2'-dinaphthylmethane-6,6'-disulfonate, in addition to a diluent or inert material. However, in addition to this use, wettable powders can also be used like the above-described dusts.

Dusty formulations usually comprise from 0.5 to 95% by weight of the composition according to the invention, with the remainder up to 100% by weight being composed of customary formulation constituents. In the case of granules, the content of the composition according to the invention partially depends on the physical state in which this composition is present and on which granulation aids, fillers, etc., are used. In the case of pastes and gels, the content of the composition according to the invention can amount to from about 0.001 to 95% by weight. In wettable powders, the concentration of the composition according to the invention is, for example, from about 0.5 to 95% by weight; in the case of sprayable solutions it is from about 0.5 to 50% by weight.

In addition, said formulations comprise, where appropriate, the adhesives, wetting agents, dispersants, emulsifiers, penetration agents, solvents, fillers or carrier substances which are in each case customary.

The necessary formulation aids, such as inert materials, surfactants, solvents and other additives, are likewise known and described, for example, in: Watkins, "Handbook of Insecticide Dust Diluents and Carriers", 2nd Ed., Darland Books, Caldwell N.J.; H. v. Olphen, "Introduction to Clay Colloid Chemistry", 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte" [Surface-active ethylene oxide adducts], Wiss. Verlagsgesell., Stuttgart 1967; Winnacker-Küchler, "Chemische Technologie" [Chemical Technology], Volume 7, C. Hanser Verlag Munich, 4th Ed., 1986.

These sources, and the literature cited therein, are hereby expressly incorporated by reference; by being cited, they are to be regarded as being a constituent part of the description.

Customary defoamers are based, for example, on tributyl phosphate or silicone, such as dialkylpolysiloxanes; examples of customary antifreeze agents are propylene glycol and glycerol; hygroscopic compounds which are employed are, for example, ^{®}Aqua-Sorb and ^{®}Stock-O-Sorb (water-binding gels from horticultural practice for protecting roots from drying out).

The content of one or more additional solvents and formulation aids is from 0.001 to 90% by weight, preferably from 0.01 to 75% by weight, particularly preferably from 0.1 to 60% by weight.

For use, the concentrates which are present in commercially available form, predominantly as a formulation, are either employed undiluted or, where appropriate, employed after having been diluted in a customary manner, either with water and/or another inert material, as is used, for example, in the formulation, in each case in conformity with the intended use.

On the basis of these formulations, it is also possible to produce combinations containing fertilizers and/or growth regulators, for example in the form of a finished formulation (syn. coformulation) or as a subsequent addition (syn. tank mix).

The content of the above-described active compounds in the formulated form of the composition according to the invention can, for example, be in a range from 0.00000001 up to 99% by weight of active compound, preferably between 0.00001 and 90% by weight.

The composition according to the invention is used in a customary manner which is suited to the use forms, for example by either the composition according to the invention, directly, or a formulation comprising the composition according to the invention, for example as a gel formulation, being applied, in adequately effective quantity, onto or in the vicinity of the plants, and/or their seeds, which have been infested with the animal pests and in the substrates, areas or spaces colonized by them.

The application is effected using the methods which are customary in practice, for example by means of spraying, atomizing, pouring, injecting, bandaging, coating, scattering, dusting, powdering, vaporizing, nebulizing or immersing, as a depot and/or over a wide area.

The composition according to the invention is preferably used in agriculturally important crops of useful plants and ornamental plants in the areas of agriculture, horticulture, and forestry, for example in fruit plantations and cereal crops (e.g. wheat, barley, rye, oats, millet, rice, manioc and com) or else crops of sugarbeet, sugarcane, cotton, soybean, rape, potatoes, tomatoes, peppers, peas and other vegetable types, with this also including transgenic plants; very particular preference is given to using the composition according to the invention in crops of Coffea (coffee), Capsicum annuum (peppers), Citrus, Prunus (stone fruit), Ficus carica (fig), Malus domestica (apple), Psidium guajava (guava), Theobroma cacao (cocoa), Syzygium jambos (rose apple), Terminalia catappa (tropical almond), Prunus dulcis (almond), Persea americana (avocado), Mangifera indica (mango), Coffea arabica (coffee (arabica)), Carica papaya (papaya fruit), Citrus aurantium (Seville orange), Citrus limon (lemon), Citrus sinensis (orange), Diospyros (malabar nut), Eriobotrya japonica (Japanese medlar), Fortunella (kumquat), Musa paradisiaca (banana), Prunus armeniaca (apricot), Prunus domestica (plum), Prunus persica (peach), Spondias purpurea, Vitis vinifera (grape), Citrus reticulata (mandarin orange), Cydonia oblonga (quince), Eugenia uniflora (Surinam cherry), Pyrus communis (pear), Anacardium occidentale (cashew nut), Annona reticulata (Bahamian custard apple), Capsicum frutescens (red chilli), Carissa, Casimiroa edulis (white sapote), Chrysophyllum cainito (star apple), Citrus aurantiifolia (lime), Citrus limetta (sweet lime), Citrus grandis, Citrus limonia, Citrus nobilis (tangerine), Citrus reticulata x paradisi (satsuma), Citrus paradisi (grapefruit), Citrus aurantium (bitter orange), Citrus deliciosa (tangerine), Citrullus vulgaris (watermelon), Coffea liberica (Liberian coffee), Cyphomandra, Dovyalis caffra (kei apple), Eugenia, Garcinia mangostana, Juglans regia (walnut), Litchi chinensis (lychee), Malpighia glabra (Barbados cherry), Manilkara zapota (sapodilla), Mespilus germanica (medlar), Morus (black mulberry), Muntingia calabura, Opuntia (prickly pear), Phoenix dactylifera (date), Passiflora coerulea (passionfruit), Physalis peruviana (Cape gooseberry), Psidium littorale (strawberry guava), Punica granatum (pomegranate), Rubus loganobaccus (loganberry), Spondias cytherea (sweet monbin plum), Syzygium cumini (Java plum), Syzygium malaccense (Malay apple), Syzygium samarangense (Java apple), Thevetia peruviana, Cyphomandra betacea (tree tomato), Fortunella japonica (marumi kumquat), Olea europeae (olive), Rubus idaeus (raspberry), Vaccinium corymbosum (blueberry), Vaccinium vitis-idaea (cranberry), Lycopersicon esculentum (tomato), Rubus fruticosus (true blackberry), Fragaria ananassa (strawberry), Actinidia chinensis (kiwi), Ribes uva-crispa (gooseberry), Pereskia aculeata (Barbados gooseberry), Ribes nigrum (blackcurrant), Ribes rubrum (redcurrant), Cerasus avium (cherry), Ananas comosus (pineapple).

The necessary quantity to be used varies with the external conditions, such as temperature and moisture and other factors, and can therefore fluctuate within wide limits. When a gel formulation is used, the quantity employed is, for example, between 0.5 and 50 liters of ready-to-use gel per hectare; however, the quantity employed is preferably between 2.5 and 10 liters of ready-to-use gel per hectare.

Another preferred area of application is that of animal husbandry and animal breeding since the composition according to the invention is also suitable for use in the field of veterinary medicine, preferably for luring and controlling ectoparasites and nuisance pests. Accordingly, the composition according to the invention can particularly advantageously be used in the husbandry of livestock (e.g. cattie, sheep, pigs and poultry, such as hens, geese, etc.) and also In connection with animals from the domestic and leisure areas (e.g. horses, cats, dogs, rabbits, domestic rabbits, guinea pigs and hamsters). In a preferred embodiment of the invention, the composition according to the invention is administered externally to the animals, either directly (e.g. to the body) or indirectly (e.g. by way of a collar or halter). In another preferred embodiment of the invention, the composition according to the invention is used in the field of animal husbandry and, where appropriate, combined with other measures, for example adhesive boards or traps. The doses and formulations which are in each case suitable depend, in particular, on the nature and the stage of development of the productive animals and domestic animals and also on the degree of infestation and can be readily determined and established using the customary methods.

Other preferred areas of use are the protection of stored products and materials, the hygiene sector and the domestic field, with, as the preferred embodiment of the invention, the composition according to the invention being employed In the corresponding premises and, where appropriate, combined with other measures, such as adhesive boards or traps. In this case, too, suitable doses and formulations depend, in particular, on the nature and the severity of the Infestation and can be readily determined and established using the customary methods.

The present invention is illustrated by the following examples without being restricted to them.

### A Preparation and formulation examples

### A1. Preparing a composition according to the invention

### Example 1: Preparing a composition according to the invention using the yeast protein autolysate ^{®}Pinnacle and the pyrogenic silicic acid ^{®}Aerosil 200

35 g of ^{®}Aerosil 200 are aliquoted into a mixer equipped with a kneading hook and slowly stirred. After that, 65 g of ^{®}Pinnacle protein autolysate (technical product containing 49.5% by weight of water), which has previously been liquefied at a temperature of 25-30°C, are slowly added and mixed with the ^{®}Aerosil 200 for 30 minutes. The mixture is subsequently ground in a high-speed mill, such as ^{®}IKA-M20, for precisely 7 seconds to give a pale beige powder having good flow properties.

### Example 2: Preparing a composition according to the invention using the yeast protein autolysate ^{®}Pinnacle and the precipitated silicic acid ^{®}Sipernat 50 S

32.8 g of ^{®}Sipernat 50 S are aliquoted into a mixer equipped with a kneading hook and slowly stirred. After that, 67.2 g of ^{®}Pinnacle protein autolysate (technical product containing 49.5% by weight of water), which has previously been liquefied at a temperature of 25-30°C, are slowly added and mixed with the ^{®}Sipernat 50 S for 30 minutes. The mixture is subsequently ground in a high-speed mill, such as ^{®}IKA-M20, for precisely 7 seconds to give a pale beige powder having good flow properties.

### A2. Formulating a composition according to the invention

### Example 1: Formulating a composition according to the invention containing the yeast protein autolysate ^{®}Pinnacle and the pyrogenic silicic acid ^{®}Aerosil 200 as a gel in combination with the insecticide Fipronil

49 g of the composition according to the invention which was described in preparation example 1 were added to 946 ml of water at a temperature of 25-30°C. Subsequently, 5 g of a mixture comprising 98.75% by weight of the gelatinizing agent ^{®}Rhodigel Easy (heteropolysaccharide; Rhodia GmbH, Frankfurt/M., Germany), 1% by weight of the insecticide Fipronil in ready-to-use formulation (^{®}Regent 800 WG; Bayer CropScience) and 0.25% by weight of the wetting agent ^{®}Morwet D425 (naphthalene sulfonate condensate; Witco, Geneva, Switzerland) were stirred into this solution while stirring continuously. After this mixture had dissolved completely, and had set after 10-15 minutes, this ready-to-use gel formulation was then used immediately.

### Example 2: Formulating a composition according to the invention containing the yeast protein autolysate ^{®}Pinnacle and the precipitated silicic acid ^{®}Sipemat 50 S as a gel in combination with the insecticide Fipronil

45 g of the composition according to the invention described in preparation example 2 were added to 950 ml of water at a temperature of 25-30°C. Subsequently, 5 g of a mixture composed of 98.75% by weight of the gelatinizing agent ^{®}Rhodigel Easy (heteropolysaccharide; Rhodia GmbH, Frankfurt/M., Germany), 1% by weight of the insecticide Fipronil in ready-to-use formulation (^{®}Regent 800 WG; Bayer CropScience) and 0.25% by weight of the wetting agent ^{®}Morwet D425 (naphthalene sulfonate condensate; Witco, Geneva, Switzerland) were stirred into this solution while stirring continuously. After this mixture was completely dissolved, and had set after 10-15 minutes, this ready-to-use gel formulation was then used immediately.

### A3. Combination

### Example 1: Ready-to-use composition according to the invention containing yeast protein autolysate ^{®}Pinnacle and the pyrogenic silicic acid ^{®}Aerosil 200 in combination with the insecticide Fipronil

90.741 % by weight of the composition according to the invention described in preparation example 1, comprising 65% by weight of ^{®}Pinnacle Protein Autolysate (technical product containing 49.5% by weight of water) and 35% by weight of ^{®}Aerosil 200, 9.180% by weight of the gelatinizing agent ^{®}Rhodigel Easy (Rhodia GmbH, Frankfurt/M., Germany), 0.056% by weight of the insecticide Fipronil in ready-to-use formulation (^{®}Regent 800 WG; Bayer CropScience) and 0.023% by weight of the wetting agent ^{®}Morwet D425 (Witco, Geneva, Switzerland) were mixed in a closed steel drum whose volume was three times that of the added constituents. In order to prepare a liter of gel formulation, 54 g of this ready-to-use composition according to the invention, for example, were then mixed with 1000 ml of water. After dissolution and setting, this gel formulation was then used immediately.

### Example 2: Ready-to-use composition according to the invention containing the yeast protein autolysate ^{®}Pinnacle and the precipitated silicic acid ^{®}Sipernat 50 S in combination with the insecticide Fipronil

90.000% by weight of the composition according to the invention described in preparation example 2, comprising 67.2% by weight of ^{®}Pinnacle Protein Autolysate (technical product containing 49.5% by weight of water) and 32.8% by weight of ^{®}Sipernat 50 S, 9.915% by weight of the gelatinizing agent ^{®}Rhodigel Easy (Rhodia GmbH, Frankfurt/M., Germany), 0.060% by weight of the insecticide Fipronil in ready-to-use formulation (^{®}Regent 800 WG; Bayer CropScience) and 0.025% by weight of the wetting agent ^{®}Morwet D425 (Witco, Geneva, Switzerland) were mixed in a closed steel drum whose volume was three times that of the added constituents. For preparing a liter of gel formulation, 50 g of this ready-to-use composition according to the invention, for example, were then mixed with 1000 ml of water. Following dissolution and setting, this gel formulation was then used immediately.

### Example 3: Ready-to-use composition according to the invention containing the yeast protein autolysate ^{®}SPA-400 and the pyrogenic silicic acid ^{®}Cab-O-Sil M5 in combination with the insecticide Fipronil

0.50% by weight of the pyrogenic silicic acid ^{®}Cab-O-Sil M5 (Cabot GmbH, Hanau, Germany), 36.45% by weight of the gelatinizing agent ^{®}Rhodigel Easy (Rhodia GmbH, Frankfurt/M., Germany), 0.47% by weight of the insecticide Fipronil in ready-to-use formulation (^{®}Regent 800 WG; Bayer CropScience), 0.25% by weight of the wetting agent ^{®}Morwet D425 (Witco, Geneva, Switzerland) and 62.33% by weight of the pulverulent yeast protein autolysate ^{®}SPA-400 (Halcyon Proteins Pty Ltd., Melbourne, Australia) were mixed in a closed steel drum whose volume was three times that of the added constituents. For preparing a liter of gel formulation, 13.4 g of this ready-to-use composition according to the invention, for example, were then mixed with 1000 ml of water. Following dissolution and setting, this gel formulation was then used immediately.

### B Biological examples

### Description of the method

Preparation: Seven days prior to the experiments, in each case 200 ready-to-hatch pupae of the Mediterranean fruitfly Ceratitis capitata (syn. orangefly, syn. peachfly) were used, per experiment part, in a cage having a volume of 52.5 liters. The pupae, and the flies which subsequently hatched from them, were kept in a climatic chamber at 25°C, 16 hours of light/day and 65% rel. humidity and fed twice daily with a 5% by weight sugar solution, applied to filter paper, until the end of the experiment.

Implementation of the experiment: per experiment part, in each case 3 ml of the ready-to-use gel (see preparation and formulation examples) were dabbed onto a plastic plate, directly in the middle of a 5 cm diameter circle. The plastic plate was subsequently placed in the spatial center of the cage.

Assessment:
a) for attractivity - after the composition according to the invention, which was formulated as a gel, had been introduced, the number of flies in the 5 cm diameter circle was counted every 10 minutes over a period of 2 hours. The mean of this determination was subsequently calculated as a percentage of all the flies which had hatched and were still living at the beginning of the experiment (% attractivity).
b) for mortality - 24 or 48 hours after the composition according to the invention, which was formulated as a gel, had been introduced, the total number of dead flies was determined and calculated as a percentage of all the flies which had hatched and which were still living at the beginning of the experiment (% mortality).

### Example 1: Efficacy of synthetic silicic acids in combination with ^{®}Pinnacle Protein Autolysate, in accordance with the above-described preparation and formulation examples.

| Composition according to the invention ¹⁾ | | | Formulation of the composition according to the invention (composition + water ad 1 ml) | | Content of protein autolysate in the experiment [% by weight] | Attractivity for Ceratitis capitata [% attractivity] ⁵⁾ | Mortality for Ceratitis capitata after 48 hours [% mortality] ⁵⁾ |
|---|---|---|---|---|---|---|---|
| Protein autolysate content [% by weight] | Silicate | | ^{®}Rhodigel Easy [mg/ml of gel] ⁴⁾ | Composition according to the invention [mg/ml of gel] | | | |
| | Origin/ designation | Content [% by weight] | | | | | |
| 67 | Synthetic/ precipitated silicic acid 2) | 33 | 5 | 45 | 30 | 38.0 | 13.9 |
| 62 | Synthetic/ pyrogenic silicic acid 3) | 38 | 5 | 49 | 30 | 44.6 | 12.9 |
| Untreated control of Ceratitis capitata | | | | | | 0.0 | 9.0 |

| | | | | | | | |
|---|---|---|---|---|---|---|---|
| 1) ^{®}Pinnacle protein (technical product containing 49.5% by weight of water; Mauri Yeast Australia Ltd., Toowoomba, Queensland, Australia) 2) ^{®}Sipernat 50 S (Degussa AG, Frankfurt/M., Germany) 3) ^{®}Aerosil 200 (Degussa AG, Frankfurt/M., Germany) 4) Rhodia GmbH, Frankfurt/M., Germany 5) Mean of 3 repeats | | | | | | | |

### Example 2: Comparison with biological example 1

| Composition | | | Formulation of the composition (composition + water ad 1 ml) | | Content of protein autolysate in the experiment [% by weight] | Attractivity for Ceratitis capitata [% attractivity] | Mortality for Ceratitis capitata after 48 hours [% mortality] |
|---|---|---|---|---|---|---|---|
| Protein autolysate content [% by weight] | Silicate | | ^{®}Rhodigel Easy [mg/ml of gel] ²⁾ | Composition [mg/ml of gel] | | | |
| | Origin/ designation | Content [% by weight] | | | | | |
| 100 | - | 0 | 5 | - | 30 | 33.4 ³⁾ | 10.8 ³⁾ |
| 32 | Natural/ diatomace ous earth 1) | 68 | 5 | 94 | 30 | 18.0 ⁴⁾ | 14.7 ⁴⁾ |
| Untreated control of Ceratitis capitata | | | | | | 0.0 | 9.0 |

| | | | | | | | |
|---|---|---|---|---|---|---|---|
| 1) ^{®}Diamol GM (Betram Mineral GmbH, Hamburg, Germany) 2) Rhodia GmbH, Frankfurt/M., Germany 3) Mean of 2 repeats 4) Mean of 3 repeats | | | | | | | |

The two experiments depicted in examples 1 and 2 showed clearly that the composition according to the invention containing synthetic silicic acids, such as precipitated silicic acids (^{®}Sipernat 50 S) and pyrogenic silicic acids (^{®}Aerosil 200), exerts a higher degree of luring power (attractivity) than does the protein autolysate in which no synthetic silicic acid was used. By contrast, the use of natural silicates, in this case diatomaceous earth (^{®}Diamol GM), reduced the attractivity. The mortality rate in the case of the compositions according to the invention to a large extent corresponded to those of the control. It was therefore possible to rule out any additional increase in mortality due to a direct effect of the synthetic silicic acids.

### Example 3: Comparison of the efficacy of the composition according to the invention when containing different protein autolysates in combination with an insecticide, in accordance with the above-described preparation and formulation examples.

| Composition according to the invention | | | | Formulation of the composition according to the invention (composition + water ad 1 ml) | | Content of protein autolysate in the experiment [% by weight] + 0.005% by weight of insecticide (Fipronil) ⁵⁾ | Attractivity for Ceratitis capitata [% attractivity] ⁶⁾ | Mortality for Ceratitis capitata after 24 hours [% mortality] 6) |
|---|---|---|---|---|---|---|---|---|
| Protein autolysate ¹⁾ | | Synthetic silicic acids ²⁾ | | | | | | |
| Designation | Content [% by weight] | Designation | Content [% by weight] | 99 parts of ^{®}Rhodigel Easy and 1 part of ^{®}Regent 800 WG [mg/ml of gel] ⁴⁾ | Composition according to the invention [mg/ml of gel] | | | |
| ^{®}Pinnacle | 62 | ^{®}Aerosil 200 | 38 | 5 | 49 | 30 | 9.2 | 69.5 |
| ^{®}Pinnacle | 67 | ^{®}Sipernat 50 S | 33 | 5 | 45 | 30 | 6.4 | 65.9 |
| ^{®}SPA-400 | 62 ³⁾ | ^{®}Cab-O-Sil M5 | 0.5 ³⁾ | 5 ³⁾ | 13.4 | 8.4 | 10.6 | 54.1 |
| Untreated control of Ceratitis capitata | | | | | | | 0.0 | 8.3 |

| | | | | | | | | |
|---|---|---|---|---|---|---|---|---|
| 1) ^{®}Pinnacle protein (technical product containing 49.5% by weight of water; Mauri Yeast Australia Ltd., Toowoomba, Queensland, Australia), ^{®}SPA-400 (Halcyon Proteins Pty Ltd., Melbourne, Australia) 2) ^{®}Aerosil 200 (Degussa AG, Frankfurt/M., Germany), ^{®}Sipemat 50 S (Degussa AG, Frankfurt/M., Germany), ^{®}Cab-O-Sil M5 (Cabot GmbH, Hanau, Germany) 3) in this case, only content values, since these constituents are already present in a finished formulation 4) ^{®}Rhodigel Easy (Rhodia GmbH, Frankfurt/M., Germany), ^{®}Regent 800 WG (insecticidal active substance: Fipronil; Bayer CropScience) 5) ^{®}Regent 800 WG 6) Mean of 5 repeats | | | | | | | | |

### Example 4: Comparison with biological example 3

| Composition | | | | Formulation of the composition (composition + water ad 1 ml) | | Content of protein autolysate in the experiment [% by weight] + 0.005% by weight of insecticide (Fipronil) ⁴⁾ | Attractivity for Ceratitis capitata [% attractivity] ⁵⁾ | Mortality for Ceratitis capitata after 24 hours [% mortality] 5) |
|---|---|---|---|---|---|---|---|---|
| Protein autolysate ¹⁾ | | Natural silicate ²⁾ | | | | | | |
| Designation | Content [% by weight] | Designation | Content [% by weight] | 99 parts of ^{®}Rhodigel Easy and 1 part of ^{®}Regent 800 WG [mg/ml of gel] ³⁾ | Composition [mg/ml of gel] | | | |
| ^{®}Pinnacle | 32 | ^{®}Diamol GM | 68 | 5 | 94 | 30 | 3.5 | 51.5 |
| Untreated control of Ceratitis capitata | | | | | | | 0.0 | 8.3 |

| | | | | | | | | |
|---|---|---|---|---|---|---|---|---|
| 1) ^{®}Pinnacle protein (technican product containing 49.5% by weight of water; Mauri Yeast Australia Ltd., Toowoomba, Queensland, Australia) 2) ^{®}Diamol GM (Betram Mineral GmbH, Hamburg, Germany) 3) ^{®}Rhodigel Easy (Rhodia GmbH, Frankfurt/M., Germany), ^{®}Regent 800 WG (insecticidal active substance: Fipronil; Bayer CropScience) 4) ^{®}Regent 800 WG 5) Mean of 5 repeats | | | | | | | | |

The two experiments depicted in examples 3 and 4 clearly showed that protein autolysates derived from yeasts from different origins give rise to good luring power (attractivity) in the composition according to the invention. In combination with an insecticidal substance, in this case Fipronil, the mortality of the composition according to the invention was greater than that in the case of the natural silicate (^{®}Diamol GM), which was tested in example 4 for comparison. In addition, the experiment depicted in example 3 demonstrated that different methods for preparing and formulating the composition according to the invention lead to comparable results.

## Claims

1. A composition comprising:
a) one or more protein autolysates derived from yeasts,
b) one of more synthetic silicic acids.
c) one or more active compounds directed against animal pests.

2. A composition as claimed in claim 1, wherein the protein autolysates are derived from yeasts of the genera Saccharomyces and Schizosaccharomyces.

3. A composition as claimed in claim 1 or 2, wherein the synthetic silicic acids are derived from the groups pyrogenic silicic acids and precipitated silicic acids.

4. A pesticidal composition as claimed in claim 1, wherein component c) is an insecticide.

5. A pesticidal composition as claimed in claim 1, wherein component c) is fipronil.

6. The use of a composition as claimed in one or more of claims 1 to 5 in agriculture, horticulture, forestry, protection of stored products and materials, the hygiene sector or the domestic field for luring and controlling animal pests.

7. The use as claimed in claim 6, wherein the animal pests are arthropods.

8. The use as claimed in claim 7, wherein the arthropods are synanthropic flies.

9. The use of a composition as claimed in one or more claims 1 to 5 for the manufacture of a medicament in vetinary medicine.

10. A method for luring and controlling animal pests in agriculture, horticulture, forestry, protection of stored products and materials, the hygiene sector or the domestic field comprises bringing a composition as claimed in one or more of claims 1 to 4 into contact with the animal pests.

11. The method as claimed in claim 10, wherein the composition is applied onto, or in the vicinity of, the plants, or their seeds, which are infested with the animal pests and in the substrates, areas or spaces colonized by them.

## Patentansprüche

1. Zusammensetzung, umfassend:
a) ein oder mehrere von Hefen stammende Proteinautolysate,
b) ein oder mehrere synthetische Kieselsäuren,
c) eine oder mehrere gegen tierische Schädlinge gerichtete Verbindungen.

2. Zusammensetzung nach Anspruch 1, worin die Proteinautolysate von Hefen der Familie Saccharomyces und Schizosaccharomyces stammen.

3. Zusammensetzung nach Anspruch 1 oder 2, worin die synthetischen Kieselsäuren von den aus pyrogenen Kieselsäuren und Kieselhydrogelen bestehenden Gruppen stammen.

4. Pestizid-Zusammensetzung nach Anspruch 1, worin Komponente c) ein Insektizid ist.

5. Pestizid-Zusammensetzung nach Anspruch 1, worin Komponente c) Fipronil ist.

6. Verwendung einer Zusammensetzung nach einem der Ansprüche 1 bis 5 in der Landwirtschaft, im Gartenbau, in der Forstwirtschaft, beim Schutz von Lagerprodukten- und -materialien, im Hygienebereich oder im Haushalt zur Anlockung und Bekämpfung von tierischen Schädlingen.

7. Verwendung nach Anspruch 6, worin die tierischen Schädlinge Arthropoden sind.

8. Verwendung nach Anspruch 7, worin die Arthropoden synanthrope Fliegen sind.

9. Verwendung einer Zusammensetzung nach einem der Ansprüche 1 bis 5 zur Herstellung eines Medikaments in der Veterinärmedizin.

10. Verfahren zur Anlockung und Bekämpfung von tierischen Schädlingen in der Landwirtschaft, im Gartenbau, in der Forstwirtschaft, beim Schutz von Lagerprodukten- und -materialien, im Hygienebereich oder im Haushalt, umfassend das Kontaktieren einer Zusammensetzung nach einem der Ansprüche 1 bis 4 mit den tierischen Schädlingen.

11. Verfahren nach Anspruch 10, worin die Zusammensetzung auf von tierischen Schädlingen befallene Pflanzen oder ihre Samen oder in ihrer Nähe und auf Substrate, Flächen oder Bereiche aufgebracht wird, die von tierischen Schädlingen befallen sind.

## Revendications

1. Composition comprenant :
a) un ou plusieurs autolysats de protéines dérivés de levures ;
b) un ou plusieurs acides siliciques synthétiques ;
c) un ou plusieurs composés actifs dirigés contre des animaux parasites.

2. Composition suivant la revendication 1, dans laquelle les autolysats de protéines sont dérivés de levures des genres Saccharomyces et Schizosaccharomyces.

3. Composition suivant la revendication 1 ou 2, dans laquelle les acides siliciques synthétiques sont dérivés des groupes des acides siliciques de pyrogénation et des acides siliciques précipités.

4. Composition suivant la revendication 1, dans laquelle le constituant c) est un insecticide.

5. Composition suivant la revendication 1, dans laquelle le constituant c) est le fipronil.

6. Utilisation d'une composition suivant l'une quelconque des revendications 1 à 5 en agriculture, en horticulture, en sylviculture, dans la protection de produits et matériaux entreposés, dans le secteur de l'hygiène ou dans le domaine domestique, pour leurrer et détruire des animaux parasites.

7. Utilisation suivant la revendication 6, dans laquelle les animaux parasites sont des arthropodes.

8. Utilisation suivant la revendication 7, dans laquelle les arthropodes sont des mouches sinanthropes.

9. Utilisation d'une composition suivant une ou plusieurs des revendications 1 à 5 pour la production d'un médicament destiné à la médecine vétérinaire.

10. Procédé pour attirer et détruire des animaux parasites en agriculture, en horticulture, en sylviculture, dans la protection de produits et matériaux entreposés, dans le secteur de l'hygiène ou dans le domaine domestique, qui comprend l'étape consistant à mettre une composition suivant l'une quelconque des revendications 1 à 4 en contact avec les animaux parasites.

11. Procédé suivant la revendication 10, dans lequel la composition est appliquée sur, ou est à proximité de, plantes, ou leurs semences, qui sont infestées par les animaux parasites et dans les substrats, les zones ou les espaces colonisés par ces animaux parasites.
